## Europäisches Patentamt
## European Patent Office
## Office européen des brevets

(19)

(11) Numéro de publication : **0 011 602**
**B1**

(12)

# FASCICULE DE BREVET EUROPÉEN

(45) Date de publication du fascicule du brevet :
**23.12.81**

(21) Numéro de dépôt : **79810144.0**

(22) Date de dépôt : **05.11.79**

(51) Int. Cl.³ : **C 22 C 14/00, C 22 C 38/14, F 17 C 11/00**

(54) Composition d'alliage à base de titane et de fer pour le stockage de l'hydrogène.

(30) Priorité : **14.11.78 CH 11674/78**

(43) Date de publication de la demande :
**28.05.80 (Bulletin 80/11)**

(45) Mention de la délivrance du brevet :
**23.12.81 Bulletin 81/51**

(84) Etats contractants désignés :
**BE DE FR GB IT NL**

(56) Documents cités :
**DE - A - 2 701 893**
**DE - A - 2 707 097**
**FR - A - 2 331 623**
**US - A - 3 922 872**

(73) Titulaire : **BATTELLE MEMORIAL INSTITUTE**
**7 route de Drize**
**CH-1227 Carouge/Genève (CH)**

(72) Inventeur : **De Pous, Olivier**
**29, rue de Chêne-Bougeries**
**CH-1224 Chêne-Bougeries (CH)**

(74) Mandataire : **Dousse, Blasco et al**
**7, route de Drize**
**CH-1227 Carouge/Genève (CH)**

Imprimerie Jouve, 17, rue du Louvre, 75001 Paris, France

## Composition d'alliage à base de titane et de fer pour le stockage de l'hydrogène

Différents métaux et alliages ont été proposés comme matériau pour le stockage de l'hydrogène. US-A-3.516.263 décrit le stockage d'hydrogène dans un alliage titane-fer, correspondant notamment au composé TiFe (qui peut absorber l'hydrogène) à température ambiante sous des pressions comprises entre 20 et 50 bar.

La capacité de stockage de cet alliage TiFe peut varier notablement, entre 1 et 1,75 % d'hydrogène en poids de l'alliage, selon la qualité de l'alliage et la pureté de l'hydrogène à stocker.

Alors qu'il est possible d'effectuer sur cet alliage TiFe, placé dans un système scellé plus de 3 000 cycles d'absorption et de désorption, sans baisse de la capacité de stockage, cette capacité peut en revanche diminuer notablement lorsque l'hydrogène absorbé et désorbé est renouvelé lors de chaque cycle.

Il s'est avéré que des impuretés contenues dans l'hydrogène peuvent d'une part, inhiber à température ambiante son absorption dans l'alliage TiFe et peuvent d'autre part, conduire, à température plus élevée, à la formation d'oxydes tels que $Ti_{10}Fe_7O_3$ dont la présence entraîne une diminution de la capacité de stockage d'hydrogène de cet alliage.

Il est mentionné par exemple à la page 31 du livre intitulé : « Hydrogen : Its Technology and Implications, Vol. II, Transmission and Storage », et publié en 1977 par CCR Press, Cleveland-Ohio, que la présence de seulement 0,01 % (100 ppm) d'oxygène dans l'hydrogène gazeux peut inhiber la réaction métal-hydrogène dans le système TiFe.

Les fabricants de systèmes de stockage utilisant TiFe comme matériau de stockage préconisent par ailleurs généralement l'utilisation d'hydrogène anhydre avec une pureté d'au moins 99,99 %. A cet égard, on peut citer par exemple la fiche technique qui définit les conditions d'utilisation du réservoir du type AHT-5 à hydrure de titane-fer, développé par la Billings Research Corporation, Utah-U.S.A. Cela exclut évidemment l'emploi de ce système ou de système équivalent pour le stockage de qualité technique couramment utilisé dans l'industrie, dont la pureté est généralement d'environ 99,5 % et la teneur en air d'environ 0,5 %.

On a en outre proposé de modifier l'alliage Ti-Fe, par diverses substitutions du fer, notamment le manganèse et/ou le nickel, comme il est décrit par exemple dans les brevets US-A-3.922.872 et US-A-4.079.523.

L'état de la technique relative aux divers alliages Ti-Fe examinés pour le stockage d'hydrogène, notamment des alliages ternaires à base de TiFe contenant un métal de transition comme substituant du fer, peut être illustré par :

— l'article de G. D. Sandrock, intitulé : « Metallurgical Considerations in the Production and Use of FeTi Alloys for Hydrogen Storage » et publié dans Proc. 11th International Energy Conversion and Engineering Conference, pages 965-971, par le American Institute of Chemical Engineers, New York 1974 ;

— l'article de J. J. Reilly, intitulé : « Titanium Alloy Hydrides and their Applications » publié dans Proc. Ist World Hydrogen Energy Conference par Verizroglu T. N. Ed, University of Miami, Coral Gables-Florrida-U.S.A. en 1976.

Cet état de la technique démontre essentiellement que l'on peut réduire la pression d'équilibre de l'hydrure formé à partir de l'alliage TiFe, et cela par une substitution du fer par du chrome, manganèse, cobalt, nickel ou cuivre.

Cela veut dire que de tels alliages ternaires peuvent être utilisés pour le stockage d'hydrogène à pression réduite grâce à l'introduction de l'un ou de l'autre des substituants mentionnés ci-dessus.

Toutefois, un programme expérimental effectué dans le cadre de la présente invention a démontré que les alliages à base de TiFe tels que proposés jusqu'ici ne constituent pas des compositions permettant le stockage d'hydrogène de qualité technique d'une manière vraiment satisfaisante, à savoir :

— Une composition permettant le stockage d'une grande quantité d'hydrogène malgré la présence dans le gaz d'impuretés de type oxydant.

— Le maintien de cette capacité de stockage lors d'un grand nombre de cycles d'absorption-désorption d'hydrogène de qualité technique.

— Absorption rapide d'hydrogène dans des conditions opératoires de température, de pression et de durée acceptables, afin de pouvoir assurer une utilisation optimale du matériau de stockage et réduire les frais d'investissement et d'exploitation autant que possible.

La présente invention a pour but de fournir un alliage à base de titane et de fer, qui est essentiellement stable, inoxydable, capable d'absorber rapidement une grande quantité d'hydrogène et de maintenir une capacité de stockage élevée lors des cycles successifs d'absorption et de désorption d'hydrogène de qualité technique, le bout de manière à obvier aux inconvénients susmentionnés, et à tenir compte des exigences susmentionnées.

A cette fin, la présente invention a pour objet un alliage à base de titane et de fer pour le stockage de l'hydrogène, caractérisé par le fait que sa composition atomique correspond à la formule $Ti_wFe_xM'_yM''_z$ dans laquelle :

— M' représente un substituant du fer, choisi parmi au moins l'un des métaux de transition des groupes VB et VIB du système périodique (IUPAC), dont une concentration atomique y est comprise entre 0,01 et 0,2, et qui sert à rendre l'alliage essentiellement inoxydable en présence d'impuretés oxydantes contenues dans l'hydrogène à stocker ;

— M″ représente un autre substituant du fer, choisi parmi au moins l'un des métaux nickel et manganèse, à l'exclusion du manganèse si M′ est le chrome, dont la concentration atomique z est comprise entre 0,01 et 0,2, et qui sert à favoriser l'absorption d'hydrogène dans ledit alliage ; et,

— La concentration atomique w du titane est au moins égale à la somme des concentrations atomiques x, y, et z du fer et desdits substituants M′ et M″.

## Exemple 1

### A. Préparation

Un alliage quaternaire ayant la composition atomique $Ti_{0,5}Fe_{0,45}Cr_{0,025}Ni_{0,025}$ a été préparé par cofusion sous atmosphère protectrice (argon), solidifié et broyé de manière à produire une poudre (d'une taille moyenne de 0,5 mm).

### B. Activation

La poudre d'alliage a été ensuite activée à l'aide d'hydrogène de haute pureté (99,999 7 % $H_2$), appelé ci-après « hydrogène pur ».

A cette fin, on a placé la poudre à activer dans un autoclave que l'on a d'abord dégazé, par chauffage à 300 °C sous vide de $10^{-2}$ torr.

#### B.1 Absorption

Après ce dégazage, on a effectué une phase d'absorption d'hydrogène en maintenant dans l'autoclave une atmosphère d'hydrogène sous une pression de 50 bar et en refroidissant l'autoclave à 25 °C. L'absorption d'hydrogène a été effectuée ainsi à 25 °C, sous 50 bar, et la poudre d'alliage a alors pu atteindre son degré de saturation en hydrogène en moins d'une heure (d'absorption).

#### B.2 Désorption

Après la phase d'absorption décrite, on a effectué une phase de désorption en chauffant l'autoclave à 100 °C et en laissant échapper l'hydrogène ou en maintenant dans l'autoclave une pression de 1 bar, et cela de manière à désorber une partie prépondérante de l'hydrogène absorbé dans la poudre d'alliage. Au bout d'une heure de désorption dans ces conditions, la quantité d'hydrogène résiduel dans l'alliage correspondait à 0,05 % d'hydrogène en poids de l'alliage.

#### B.3 Cycles d'absorption-désorption

L'activation de la poudre d'alliage a été effectuée en soumettant cette poudre à plusieurs cycles successifs d'absorption selon B.1 et de désorption selon B.2 ci-dessus, jusqu'à ce que la quantité totale d'hydrogène absorbé dans la poudre reste constante d'un cycle au suivant. La poudre d'alliage ainsi activée présentait alors une capacité totale de stockage correspondant à 1,8 % d'hydrogène pur en poids de l'alliage.

### C. Essais cinétiques

On a soumis une portion de la poudre d'alliage ainsi activée à une série d'essais destinés à déterminer la vitesse d'absorption de l'hydrogène pur dans cet alliage.

A cette fin, la portion de poudre d'alliage activé et saturé en hydrogène a été soumise, dans une microbalance capable de travailler sous pression, à une série de cycles de désorption et d'absorption d'hydrogène pur dans des conditions isothermes et isobares. La concentration $H_p$ d'hydrogène pur absorbé en poids de l'alliage a été alors déterminée en fonction du temps, à partir de la variation du poids de ladite portion de poudre d'alliage.

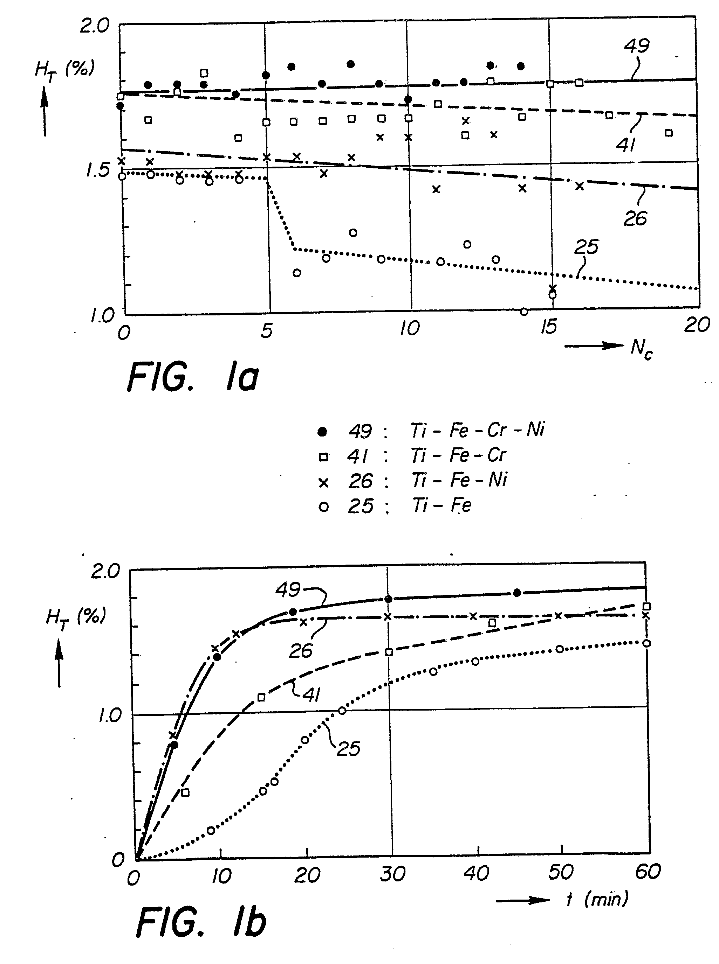

La courbe N° 49 sur la figure 1b, représente la variation en fonction du temps t de ladite concentration $H_p$ d'hydrogène absorbé en poids de l'alliage.

### D. Essais de stockage

On a soumis un échantillon formé de 5 grammes de ladite poudre d'alliage activé à une série d'essais de stockage d'hydrogène de qualité technique, appelé ci-après « hydrogène technique », qui contenait 0,5 % d'air.

Dans ces essais de stockage, on a soumis ledit échantillon à une série de cycles d'absorption et de désorption effectués dans les conditions décrites sous B.1 et B.2 ci-dessus, sauf que l'on a utilisé à chaque cycle une nouvelle quantité d'hydrogène technique (au lieu de l'hydrogène pur) pour l'absorption à 25 °C, sous une pression initiale de 50 bar.

On a en outre mesuré la baisse de pression qui a eu lieu dans l'autoclave au cours de cette absorption, jusqu'à ce que cette pression devienne presque constante. A partir de la baisse de pression ainsi mesurée, on a alors déterminé la quantité d'hydrogène technique absorbé lors de chaque cycle de stockage, c'est-à-dire la capacité $H_t$ de stockage d'hydrogène technique absorbé en poids de l'alliage formant l'échantillon.

Le chiffre N° 49 sur la figure 1a représente les résultats de cette série d'essais de stockage, à savoir la valeur de ladite capacité de stockage $H_t$ en fonction du nombre $N_c$ de cycles de stockage successifs effectués sur ledit échantillon de l'alliage quaternaire. La ligne portant le chiffre 49 sur la figure 1a représente la droite calculée par la méthode des moindres carrés, à partir des points expérimentaux de ladite série.

E. Essais comparatifs

A titre de comparaison avec les résultats susmentionnés, on a en outre effectué des séries d'essais comparatifs analogues sur d'autres alliages basés également sur le système Ti-Fe, préparés, activés et soumis aux essais de la manière décrite ci-dessus sous A et D.

Ainsi, la ligne pointillée N° 25 sur la figure *1a* correspond à la capacité $H_t$ de stockage d'hydrogène technique absorbé dans un alliage binaire formé du composé TiFe seul, c'est-à-dire un alliage ayant la composition atomique $Ti_{0,5}Fe_{0,5}$ et ne contenant donc ni du chrome, ni du nickel comme substituant du fer, comme dans le cas précédent.

De même la courbe N° 25 sur la figure *1b* correspond à la variation en fonction du temps *t* de ladite concentration $H_p$ d'hydrogène absorbé en poids de cet alliage binaire Ti-Fe.

Les figures *1a* et *1b* montrent en outre des courbes expérimentales analogues N° 26 correspondant aux résultats obtenus avec un alliage ternaire ayant la composition atomique $Ti_{0,49}Fe_{0,49}Ni_{0,02}$ donc avec le nickel comme seul substituant du fer.

Ces figures *1a* et *1b* montrent enfin d'autres courbes expérimentales analogues N° 41 correspondant aux résultats obtenus avec un alliage ternaire ayant la composition atomique $Ti_{0,5}Fe_{0,475}Cr_{0,025}$, donc avec le chrome comme seul substituant au fer.

Comme il ressort dans ces figures *1a* et *1b* :

— La capacité de stockage $H_t$ du composé TiFe (courbe 25, fig. *1a*), reste à environ 1,5 % jusqu'à $N_c = 5$, puis baisse subitement jusqu'à environ 1,1 % à $N_c = 15$.

— La concentration $H_p$ d'hydrogène absorbé dans ce composé TiFe (courbe 25, fig. *1b*) n'augmente que lentement en fonction du temps pour n'atteindre que 1,5 % en 1 heure.

— La capacité de stockage $H_t$ de l'alliage quaternaire Ti—Fe—Cr—Ni selon le présent exemple (ligne 49, fig. *1a*) maintient en revanche une valeur moyenne relativement élevée d'environ 1,79 %, sans subir aucune baisse systématique notable au cours de 14 cycles de stockage.

— La concentration d'hydrogène $H_p$ dans cet alliage quaternaire Ti—Fe—Cr—Ni (courbe 49, fig. 1b) monte en outre très rapidement de manière à atteindre une valeur de 1,5 % après environ 11 minutes, de 1,6 % après 15 minutes et de 1,8 % après 30 minutes d'absorption.

— La capacité de stockage $H_t$ desdits alliages ternaires contenant le chrome ou le nickel comme seul substituant du fer (courbes 41 et 26, fig. 1b) maintient cependant une valeur moyenne de 1,5 % sans subir une baisse systématique notable, au cours de 12 et 16 cycles, respectivement.

— La concentration d'hydrogène $H_p$ dans l'alliage ternaire Ti—Fe—Cr (courbe 41, fig. 1b) atteint une valeur de 1,4 % après 30 minutes et de 1,7 % après 60 minutes d'absorption.

— La concentration d'hydrogène $H_p$ dans l'alliage ternaire Ti—Fe—Ni (courbe 26, fig. 1b) atteint une valeur de 1,5 % après 12 minutes et de 1,65 % après 60 minutes d'absorption.

— Ainsi, grâce à l'introduction des deux substituants chrome et nickel dans ledit alliage quaternaire Ti—Fe—Cr—Ni selon le présent exemple, il devient possible, d'une part de maintenir sa capacité de stockage $H_t$ à une valeur supérieure à 1,7 % et d'autre part, d'accélérer notablement l'absorption d'hydrogène même en présence d'impuretés dans le gaz.

— Par conséquent, ledit alliage quaternaire Ti—Fe—Cr—Ni choisi conformément à l'invention permet d'assurer un stockage plus complet et plus rapide d'hydrogène que dans les autres cas discutés ci-dessus.

Il est à noter qu'on a également examiné, à titre comparatif, un alliage de composition $Ti_{0,5}Fe_{0,45}Cr_{0,05}$ de manière à mettre en évidence les différences résultant du remplacement du Ni dans l'alliage de l'exemple 1 par un équivalent de chrome. Les mesures effectuées sur cet alliage ne figurent pas au dessin, mais les résultats obtenus, en ce qui concerne la capacité d'emmagasiner l'hydrogène, sont inférieurs à ceux illustrés par la courbe 41 (alliage $Ti_{0,5}Fe_{0,475}Cr_{0,025}$). En d'autres termes, la courbe représentant le comportement de l'alliage à 0,05 de Cr serait située entre les courbes 41 et 25.

## Exemple 2

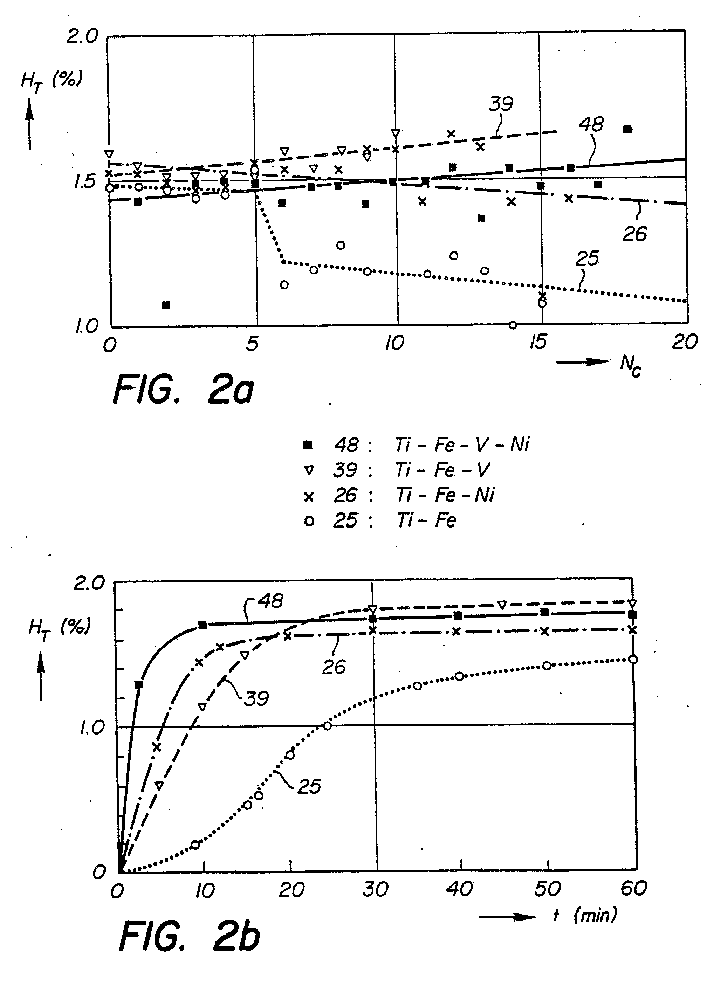

Un alliage quaternaire ayant la composition atomique $Ti_{0,5}Fe_{0,449}V_{0,024}Ni_{0,027}$ a été préparé, activé et soumis à des essais de la manière décrite dans l'exemple 1. Il a fourni les courbes expérimentales N° 48 représentées sur les figures 2a et 2b.

Un alliage ternaire ayant la composition atomique $T_{0,49}Fe_{0,477}V_{0,033}$, préparé, activé et soumis de façon similaire à des essais comparatifs, a fourni les courbes expérimentales N° 39 représentées également sur les figures *2a* et *2b*.

Ces figures 2a et 2b montrent en outre les courbes expérimentales N° 25 et 26 déjà décrites dans l'exemple 1 et représentées sur les figures *1a* et *b*.

Comme il apparaît de ces courbes expérimentales des figures 2a et 2b.

— Ledit alliage quaternaire Ti—Fe—V—Ni selon le présent exemple maintient une capacité de stockage $H_t$ constante au cours de 18 cycles (ligne 48, fig. 2a), avec une valeur moyenne d'environ 1,49 %. De plus, sa concentration $H_p$ en hydrogène absorbé monte très rapidement (courbe 48, fig. 2b) et atteint par exemple 1,5 % en 5 minutes.

— Ledit alliage ternaire Ti—Fe—V soumis à des essais comparatifs dans le présent exemple maintient une capacité de stockage $H_t$ presque constante au cours de 10 cycles (ligne 39, fig. 2a), avec une valeur moyenne d'environ 1,55 %. Sa concentration $H_p$ en hydrogène absorbé monte cependant moins rapidement (courbe 39, fig. 2b), et atteint par exemple 1,5 % en 15 minutes.

— Ledit alliage quaternaire Ti—Fe—V—Ni selon le présent exemple, contenant seulement 2,4 atomes % de vanadium et 2,7 atomes % de nickel comme substituant du fer, peut donc stocker 1,5 % d'hydrogène technique pendant au moins 18 cycles et peut en outre absorber l'hydrogène plus rapidement que ledit alliage ternaire Ti—Fe—V contenant une proportion plus grande (3,3 atomes %) de vanadium comme seul substituant de fer.

### Exemple 3

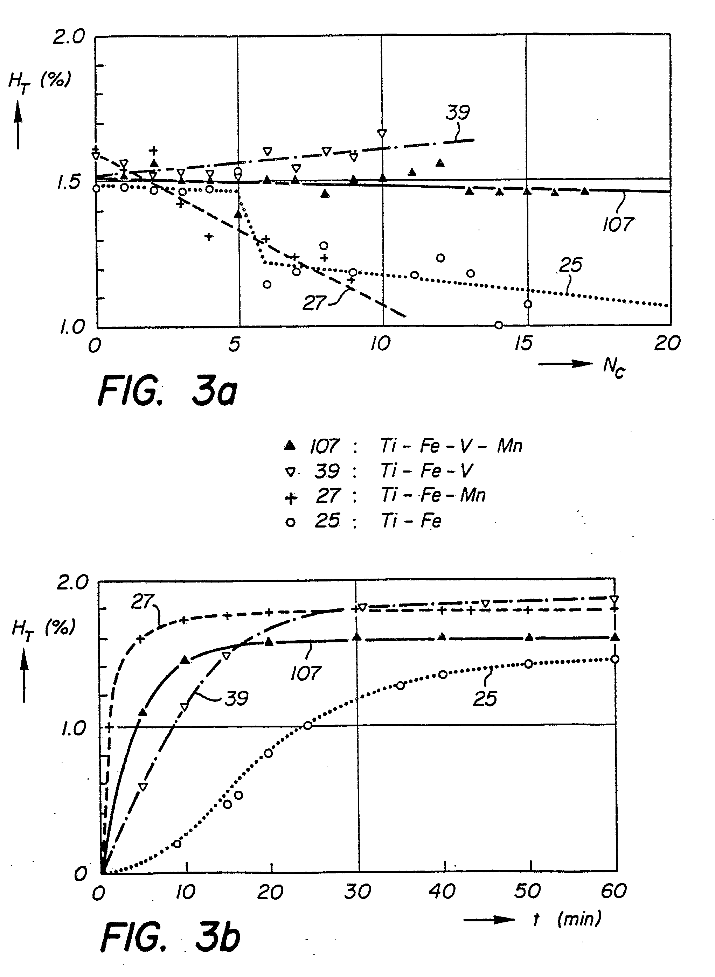

Un alliage quaternaire ayant la composition atomique $Ti_{0,501}Fe_{0,452}V_{0,024}Mn_{0,023}$ a été préparé, activé et soumis à des essais de la manière décrite dans l'exemple 1. Les courbes N° 107 sur les figures 3a et 3b représentent les résultats obtenus en l'occurrence.

Un alliage ternaire ayant la composition atomique $Ti_{0,5}Fe_{0,473}Mn_{0,027}$ a en outre été préparé, activé et soumis à des essais comparatifs de façon similaire. Les courbes expérimentales N° 27 sur les figures 3a et 3b représentent les résultats de ces essais comparatifs.

Ces figures 3a et 3b montrent en outre les courbes expérimentales N° 25 et 39 déjà décrits dans les exemples précédents.

Comme il apparaît des courbes expérimentales sur ces figures 3a et 3b :

— Ledit alliage quaternaire selon le présent exemple maintient une capacité de stockage $H_t$ presque constante au cours de 17 cycles (ligne 107, fig. 3a), avec une valeur moyenne d'environ 1,48 %. De plus, sa concentration $H_p$ en hydrogène absorbé monte rapidement (courbe 107, fig. 3a) et atteint par exemple 1,5 % en 11 minutes.

— Ledit alliage ternaire Ti—Fe—Mn soumis à des essais comparatifs dans le présent exemple subit en revanche une baisse considérable de sa capacité de stockage $H_t$ à partir du cinquième cycle (ligne 27, fig. 3a). Sa concentration $H_p$ en hydrogène absorbé augmente cependant très rapidement (courbe 27, fig. 3b) et atteint par exemple 1,5 % en 4 minutes environ.

— Ledit alliage ternaire Ti—Fe—V ayant fourni les courbes N° 39 dans l'exemple 2 maintient une capacité de stockage $H_t$ presque constante au cours de 10 cycles (lignes 39, fig. 3a), mais l'hydrogène y est absorbé moins rapidement et sa concentration $H_p$ atteint par exemple 1,5 % en 15 minutes (courbe 39, fig. 3b).

— Ledit alliage quaternaire Ti—Fe—V—Mn selon le présent exemple, contenant seulement 2,4 atomes % de vanadium et 2,3 atomes % de manganèse comme substituant du fer, peut donc stocker environ 1,5 % d'hydrogène technique pendant au moins 17 cycles, et peut en outre absorber l'hydrogène plus rapidement que ledit alliage ternaire Ti—Fe—V contenant une proportion plus grande (3,3 atome %) de vanadium comme seul substituant.

Les résultats des exemples ci-dessus sont résumés dans le tableau suivant et mettent en évidence l'intérêt des alliages quaternaires selon l'invention pour le stockage de l'hydrogène technique.

RESULTATS DES EXEMPLES 1 à 3

| Exemple Essai N° | Alliage | Capacité de stockage $H_t$ % en poids | | Temps t (min) pour $H_p = 1,5$ % | Capacité de stockage $H_p$ % en poids | |
|---|---|---|---|---|---|---|
| | | initiale | moyenne | | après 5 mn | après 15 mn |
| Ex. 1 | | | | | | |
| 49 | Ti-Fe-Ni-Cr | 1.76 | 1.79 | 12 | 1.00 | 1.60 |
| 41 | Ti-Fe-Cr | 1.77 | 1.67 | 40 | 0.50 | 1.00 |
| 26 | Ti-Fe-Ni | 1.56 | 1.49 | 12 | 1.00 | 1.60 |
| 25 | Ti-Fe | 1.52 | 1.24 | 60 | 0.1 | 0.50 |
| Ex. 2 | | | | | | |
| 48 | Ti-Fe-V-Ni | 1.44 | 1.49 | 5 | 1.5 | 1.70 |
| 39 | Ti-Fe-V | 1.51 | 1.55 | 15 | 0.65 | 1.50 |
| 26 | Ti-Fe-Ni | 1.56 | 1.49 | 12 | 1.00 | 1.60 |
| 25 | Ti-Fe | 1.52 | 1.29 | 60 | 0.1 | 0.50 |
| Ex. 3 | | | | | | |
| 107 | Ti-Fe-V-Mn | 1.51 | 1.48 | 11 | 1.1 | 1.55 |
| 39 | Ti-Fe-V | 1.51 | 1.55 | 15 | 0.6 | 1.50 |
| 27 | Ti-Fe-Mn | 1.60 | 1.40 | 4 | 1.6 | 1.75 |
| 25 | Ti-Fe | 1.52 | 1.24 | 60 | 0.1 | 0.5 |

Comme il ressort de ces résultats des exemples décrits, la combinaison des éléments dans un alliage quaternaire à base de titane de fer, selon la présence invention, permet d'obtenir simultanément les avantages suivants :

— Une capacité de stockage de l'hydrogène technique $H_t$ de l'ordre de 1,5 % (ex. 2,3 : N° 48,107) à 1,8 %, la meilleure capacité étant obtenue dans l'alliage contenant le chrome et le nickel (ex. 1 : N° 49).

— Une bonne résistance à l'oxydation, ce qui permet de stocker l'hydrogène technique (99,5 %) de façon répétitive sans baisse notable de la capacité de stockage des trois alliages quaternaires N° 49, 48 et 107 selon les exemples.

— Une grande vitesse d'absorption de l'hydrogène dont la quantité absorbée par minute est environ égale ou supérieure à 0,15 % dans lesdits trois alliages quaternaires. Etant donné cette absorption rapide, ces alliages quaternaires se prêtent particulièrement bien à des applications industrielles qui nécessitent des cycles de courte durée d'absorption et de désorption.

L'utilisation du chrome plutôt que du vanadium, comme premier substituant du fer, semble par ailleurs plus intéressante du point de vue économique.

Il semble par contre plus avantageux d'utiliser le nickel plutôt que le manganèse, comme deuxième substituant du fer, étant donné les résultats moins favorables obtenus avec les alliages contenant du manganèse.

Parmi les alliages quaternaires à base de titane et de fer décrits ci-dessus, l'alliage contenant du chrome et du nickel (N° 49) semble sans aucun doute le mieux adapté au stockage industriel de grandes quantités d'hydrogène.

Outre leur intérêt pour le stockage de l'hydrogène technique, ces alliages selon l'invention peuvent convenir à la séparation de l'hydrogène à partir d'un mélange gazeux contenant des composants oxydants (par exemple $H_2O$, $CO_2$, CO) par absorption sélective d'hydrogène dans ces alliages.

## Revendications

1. Alliage à base de titane et de fer pour le stockage de l'hydrogène, caractérisé par le fait que sa composition atomique correspond à la formule $Ti_wFe_xM'_yM''_z$ dans laquelle

— M' représente un substituant du fer, choisi parmi au moins l'un des métaux de transition des groupes VB et VIB du système périodique, dont la concentration atomique y est comprise entre 0,01 et 0,2 et qui sert à rendre l'alliage essentiellement inoxydable en présence d'impuretés oxydantes contenues dans l'hydrogène à stocker ;

— M'' représente un autre substituant du fer, choisi parmi au moins l'un des métaux nickel et manganèse, le manganèse étant exclu quand M' est le chrome, dont la concentration atomique z est comprise entre 0,01 et 0,2, et qui sert à favoriser l'absorption d'hydrogène dans ledit alliage ; et,

— La concentration atomique w du titane est au moins égale à la somme des concentrations atomiques x, y et z du fer et desdits substituants M' et M''.

2. Alliage selon la revendication 1, caractérisé par le fait que le substituant M' consiste en au moins un des métaux chrome et vanadium, le chrome étant exclu quand M'' est le manganèse.

3. Alliage selon la revendication 2, caractérisé par le fait que le substituant M'' consiste en nickel.

4. Alliage selon la revendication 3, caractérisé par le fait que les substituants M' et M'' consistent en chrome et le nickel.

## Claims

1. A titanium-iron based alloy for the storage of hydrogen, characterized by the fact that its atomic composition corresponds to the formula $Ti_wFe_xM'_yM''_z$ in which

— M' is an iron substituent selected from at least one transition metal of the groups VB and VIB of the periodic system of elements the atomic concentration y of which is comprised between 0.01 and 0.2 and having the ability to render the alloy substantially nonoxidizable in the presence of oxidizing impurities in the hydrogen to be stored,

— M'' is another iron substituent selected from at least one of the metals nickel and manganese, manganese being excluded when M' is chromium, the atomic concentration z of which is comprised between 0.01 and 0.2 and having the ability to favor hydrogen absorption by said alloy, and

— the atomic concentration w of the titanium is at least equal to the sum of the atomic concentrations x, y and z of the iron and the said substituents M' and M''.

2. An alloy according to claim 1, characterized by the fact that substituent M' is at least one of the metals chromium and manganese, chromium being excluded when M'' is manganese.

3. An alloy according to claim 2, characterized by the fact that substituent M'' consists of nickel.

4. An alloy according to claim 3, characterized by the fact that substituents M' and M'' consist of chromium and nickel.

## Ansprüche

1. Legierung auf der Basis von Tintan und Eisen zum Speichern von Wasserstoff, dadurch gekennzeichnet, daß ihre atomare Zusammensetzung der Formel $Ti_wFe_xM'_yM''_z$ entspricht, wobei

— M' ein Eisensubstitut ist, das unter mindestens einem der Übergangsmetalle der Gruppen VB und VIB des Periodischen Systems ausgewählt ist, dessen atomare Konzentration y zwischen 0,01 und 0,2 liegt und das dazu dient, die Legierung in Gegenwart von in dem zu speichernden Wasserstoff enthaltenen oxydierbaren Unreinheiten im wesentlichen nichtoxydierbar zu machen ;

— M" ein anderes Eisensubstitut darstellt, das unter mindestens einem der Metalle Nickel und Mangan ausgewählt ist, wobei Mangan dann ausgeschlossen ist, wenn M' Chrom ist, dessen atomare Konzentration z zwischen 0,01 und 0,2 liegt, und das dazu dient, die Absorption von Wasserstoff in der Legierung zu fördern ; und

— die atomare Konzentration w des Titan mindestens gleich der Summe der atomaren Konzentrationen x, y und z des Eisens und der genannten Substitute M' und M" ist.

2. Legierung nach Anspruch 1, dadurch gekennzeichnet, daß das Substitut M' aus mindestens einem der Metalle Chrom und Vanadium besteht, wobei Chrom ausgeschlossen ist, wenn M" Mangan ist.

3. Legierung nach Anspruch 2, dadurch gekennzeichnet, daß das Substitut M" aus Nickel besteht.

4. Legierung nach Anspruch 3, dadurch gekennzeichnet, daß die Substitute M' und M" aus Chrom und Nickel bestehen.

FIG. 1a

● 49 : Ti – Fe – Cr – Ni
□ 41 : Ti – Fe – Cr
× 26 : Ti – Fe – Ni
○ 25 : Ti – Fe

FIG. 1b

FIG. 2a

■ 48 : Ti – Fe – V – Ni
▽ 39 : Ti – Fe – V
× 26 : Ti – Fe – Ni
○ 25 : Ti – Fe

FIG. 2b

FIG. 3a

| | | |
|---|---|---|
| ▲ | 107 : | Ti – Fe – V – Mn |
| ▽ | 39 : | Ti – Fe – V |
| + | 27 : | Ti – Fe – Mn |
| o | 25 : | Ti – Fe |

FIG. 3b